# EUROPÄISCHE PATENTSCHRIFT

(11) **EP 2 736 811 B1**
(45) Veröffentlichungstag und Bekanntmachung des Hinweises auf die Patenterteilung: **16.12.2015**
(21) Anmeldenummer: 12725413.4
(22) Anmeldetag: 01.06.2012
(51) Int. Cl.: B65G 17/32, B65B 43/54, B65G 47/86, B67C 3/24

(54) **VORRICHTUNG ZUM TRANSPORT VON PHARMAZEUTISCHEN BEHÄLTNISSEN, INSBESONDERE VON VIALS**
APPARATUS FOR CONVEYING PHARMACEUTICAL CONTAINERS, PARTICULARLY VIALS
APPAREIL POUR TRANSPORTER DES RÉCIPIENTS PHARMACEUTIQUES, EN PARTICULIER DES FLACONS

(30) Priorität: 27.07.2011 DE 102011079885
(43) Veröffentlichungstag der Anmeldung: 04.06.2014
(73) Patentinhaber: Robert Bosch GmbH, 70442 Stuttgart (DE)
(72) Erfinder: NEHER, Stefan, 91596 Burk (DE)
(86) Internationale Anmeldenummer: PCT/EP2012/060404
(87) Internationale Veröffentlichungsnummer: WO 2013/013870

(56) Entgegenhaltungen:
- EP-B1- 0 205 953
- EP-B1- 1 841 547
- DE-A1- 4 131 699
- DE-A1-102007 048 861
- DE-U1- 29 713 510
- US-B2- 7 823 717

## Beschreibung

### Stand der Technik

Die Erfindung betrifft eine Vorrichtung zum Transport von pharmazeutischen Behältnissen, insbesondere von Vials, nach dem Oberbegriff des Anspruchs 1.

Eine derartige Vorrichtung ist aus der DE 10 2007 048 861 Al der Anmelderin bekannt. Die bekannte Vorrichtung weist zwei, um in Bezug auf die Behältnislängsachsen parallele Drehachsen für die schwenkbaren Halteelemente auf, die im Bereich eines Einlauf- und Auslaufbereichs einer pharmazeutischen Anlage geöffnet bzw. geschlossen werden können. Dies erfolgt mittels einer an einem Halteelement befestigten Laufrolle, die in Wirkverbindung mit einem ortsfest angeordneten Element gelangt. Zum Öffnen der Halteelemente schwenken diese in einer zur Förderrichtung der Behältnisse parallelen Richtung aus, so dass der Abstand der die Halteelemente tragenden Aufnahmeeinheiten, das heißt deren Teilungsabstand, von dem Schwenkbereich der Halteelemente abhängig ist. Darüber hinaus sind die der Verstellung der Halteelemente dienenden Elemente zumindest teilweise freiliegend angeordnet, was aus pharmazeutischen Gesichtspunkten als nachteilhaft angesehen wird.

Aus der EP 1 841 547 B1 und dem DE 297 13 510 U1 sind darüber hinaus Vorrichtungen mit Halteelementen bekannt, die elastisch verformbar bzw. mittels Federelementen derart zueinander verstellbar angeordnet sind, dass die Halteelemente zum Einführen bzw. Herausziehen eines Behältnisses geöffnet bzw. geschlossen werden können, wobei dies durch entsprechende, über die Behältnisse übertragene Kräfte, und nicht durch separate Öffnungs- bzw. Schließelemente erfolgt.

Aus der DE 103 60 082 A1 ist eine weitere Vorrichtung bekannt. Bei der bekannten Vorrichtung sind an einer endlos umlaufenden Fördereinrichtung Aufnahmeeinheiten für jeweils mehrere Behältnisse austauschbar angeordnet, die auf der den Behältnissen zugewandten Seite Aufnahmeöffnungen aufweisen, an denen die Behältnisse in ihrem zylindrischen Mittelbereich während des Transports der Behältnisse innerhalb einer pharmazeutischen Anlage anliegen. Um die Behältnisse während des Transports sicher positionieren zu können, weisen die Aufnahmeeinheiten darüber hinaus ein Bodenelement auf, auf dem die Behältnisse stehen. Ferner ist auf der den Aufnahmeöffnungen gegenüberliegenden Seite eine Führungsschiene angeordnet, entlang derer die Behältnisse während des Transports geführt sind. Behältnisse weisen bei unterschiedlichen Behältnisgrößen oftmals unterschiedliche Durchmesser im deren Mittelbereich auf, so dass bei einer Umstellung der Behältnisgrößen oftmals auch die Aufnahmeeinheiten ausgetauscht und zum Beispiel die Führungsschienen verstellt werden müssen. Die bekannte Vorrichtung ist daher (ohne Formatumstellung) nur für eine relativ begrenzte Anzahl von Behältnisgrößen geeignet.

Um die Behältnisse innerhalb der pharmazeutischen Anlage zum Beispiel auf deren Füllgewicht kontrollieren zu können ist es erforderlich, die Behältnisse im Bereich der entsprechenden Einrichtung freizustellen. Dies ist bei der zuletzt genannten Vorrichtung ebenfalls relativ aufwändig, da die Behältnisse auf den Bodenelementen stehen und somit zunächst aus den Aufnahmeeinheiten entnommen werden bzw. von den Bodenelementen freigestellt werden müssen. Darüber hinaus ist durch die Art des formschlüssigen Transports der Behältnisse in den Aufnahmeöffnungen der Aufnahmeeinheiten die angesprochene Führungsschiene auf der gegenüberliegenden Seite der Aufnahmeöffnungen erforderlich. Weiterhin ist während des Transports zwischen Behandlungsstationen eine einfache (manuelle) Entnahme der Behältnisse aus der Vorrichtung durch Herausheben aus den Aufnahmeöffnungen möglich, was je nach Anwendungsfall die pharmazeutische Sicherheit der Anlage negativ beeinflussen kann.

### Offenbarung der Erfindung

Ausgehend von dem dargestellten Stand der Technik liegt der Erfindung die Aufgabe zugrunde, eine Vorrichtung zum Transport von pharmazeutischen Behältnissen nach dem Oberbegriff des Anspruchs 1 derart weiterzubilden, dass sie einen möglichst kompakten Aufbau bei pharmagerechter Konstruktion aufweist.

Diese Aufgabe wird bei einer Vorrichtung zum Transport von pharmazeutischen Behältnissen mit den Merkmalen des Anspruchs 1 gelöst. Erfindungsgemäß ist es vorgesehen, dass die Halteelemente Trägerabschnitte aufweisen, die aus einem Gehäuse der Aufnahmeeinheit teilweise herausragen, dass die Längsachsen der Trägerabschnitte zumindest im Wesentlichen horizontal und senkrecht zur Transportrichtung der Behältnisse angeordnet sind, dass an den Trägerabschnitten auf der der Aufnahmeeinheit abgewandten Seite Halteabschnitte angeordnet sind, und dass die Trägerabschnitte um ihre Längsachsen schwenkbar sind. Weiterhin ist vorgesehen, dass die Trägerabschnitte innerhalb des Gehäuses eine Verzahnung aufweisen, die mit einer Gegenverzahnung wenigstens eines Verstellbolzens zusammenwirkt, der innerhalb des Gehäuses auf- und abbeweglich angeordnet ist, und dass ein einziger Verstellbolzen vorgesehen ist, der zwischen den Trägerabschnitten angeordnet ist. Dadurch lässt sich ein besonders einfacher und kompakter Aufbau der Aufnahmeeinheiten mit einer relativ geringen Bauteileanzahl ermöglichen.

Vorteilhafte Weiterbildungen der erfindungsgemäßen Vorrichtung zum Transport von pharmazeutischen Behältnissen sind in den Unteransprüchen aufgeführt.

In konstruktiver bevorzugter Ausgestaltung wird vorgeschlagen, dass die beiden Halteelemente identisch ausgebildet und symmetrisch zu einer Ebene an der Aufnahmeeinheit angeordnet sind. Dadurch ergibt sich insbesondere auch eine symmetrische Krafteinleitung der Haltekraft von den Halteelementen auf das Behältnis sowie ein relativ einfacher Aufbau der Aufnahmeeinheit durch jeweils identisch ausgebildete Halteelemente.

Um insbesondere zwischen den einzelnen Behandlungsstationen einen sicheren Transport der Behältnisse zu ermöglichen, bei der die Behältnisse innerhalb der Aufnahmeeinheiten sicher gehalten sind, wird darüber hinaus eine konstruktive Ausgestaltung vorgeschlagen, bei der der Verstellbolzen mittels eines Federelements in Richtung einen gehäusefesten Anschlags gedrückt ist, in der sich die Halteelemente in ihrer Stellung befinden.

Zur Erzeugung der Bewegung der Halteelemente, um die Behältnisse zu fassen bzw. freizugeben wird darüber hinaus vorgeschlagen, dass der Verstellbolzen zum Schwenken der Halteelemente mit einem im Bereich der Fördereinrichtung angeordneten Verstellelement zusammenwirkt. Ein derartiges Verstellelement kann beispielsweise in einfachster Ausgestaltung eine einfache Führungsschiene sein, die mit dem Verstellbolzen (z.B. über eine Rolle) zusammenwirkt.

Obwohl die erfindungsgemäße Vorrichtung einen relativ großen Einsatzbereich hinsichtlich der verwendbaren Formate der Behältnisse ermöglicht, kann es vorteilhafterweise vorgesehen sein, dass die Aufnahmeeinheit an der Fördereinrichtung austauschbar befestigt ist. Dadurch vergrößert sich der Einsatzbereich der Vorrichtung hinsichtlich der einsetzbaren bzw. transportierbaren Formate der Behältnisse.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, schematische Darstellung einer erfindungsgemäße Vorrichtung zum Transport von pharmazeutischen Behältnissen innerhalb eines Teilbereichs einer pharmazeutischen Verpackungsanlage in Draufsicht, innerhalb eines Teilbereichs einer pharmazeutischen Verpackungsanlage in Draufsicht,
- Fig. 2: eine teilweise geschnittene Seitenansicht einer Aufnahmeeinheit, wie sie bei einer Vorrichtung gemäß Fig. 1 verwendet wird,
- Fig. 3: einen Schnitt durch eine Aufnahmeeinheit gemäß Fig. 2 und
- Fig. 4: eine Draufsicht auf eine Aufnahmeeinheit gemäß der Fig. 2 und 3.

Gleiche Bauteile bzw. Bauteile mit gleicher Funktion sind in den Figuren mit den gleichen Bezugsziffern versehen.

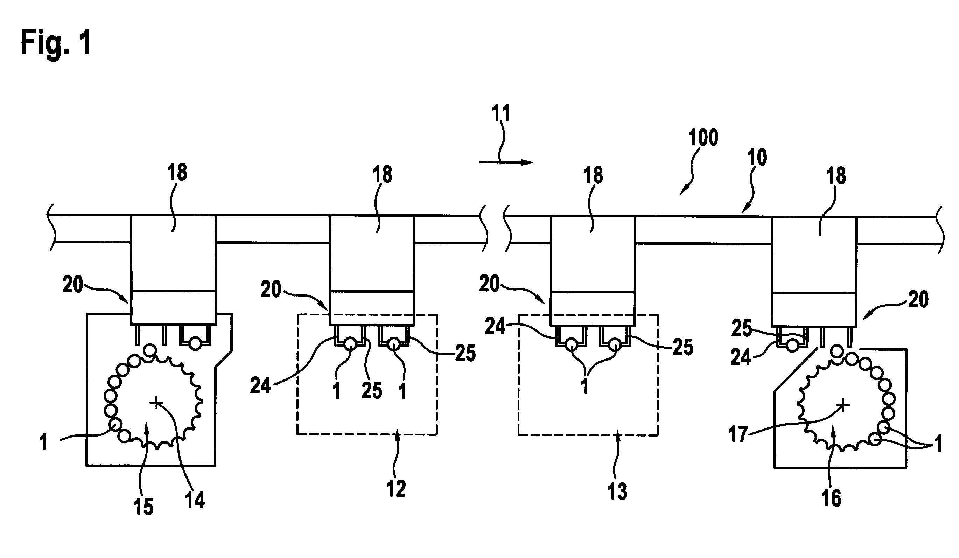

In der Fig. 1 ist ein Teilbereich einer pharmazeutischen Verpackungsanlage 100 dargestellt, wie sie insbesondere zum Füllen und Verschließen von pharmazeutischen Behältnissen, insbesondere von sogenannten Vials 1, dient.

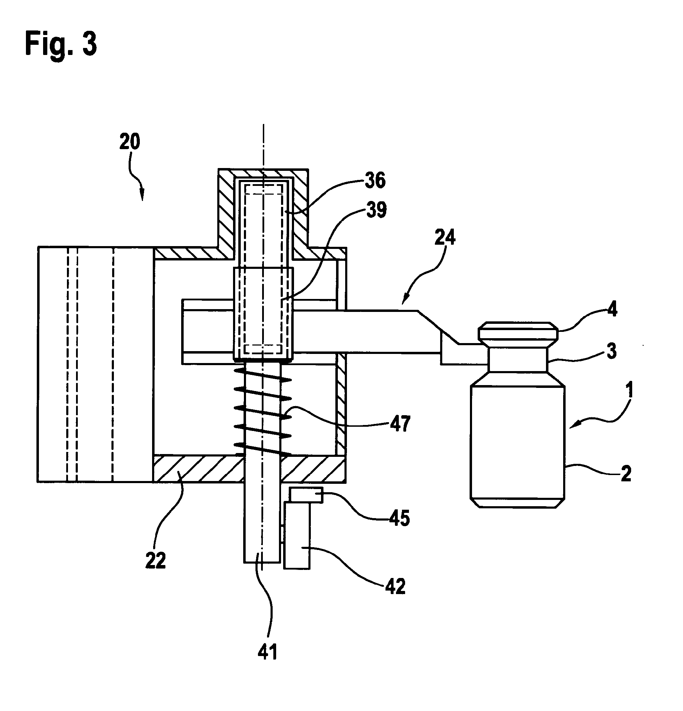

Wie besonders gut anhand der Fig. 3 erkennbar ist, handelt es sich bei einem Vial 1 um ein im Wesentlichen zylindrisches Gefäß bzw. Fläschchen mit einem zylindrischen Bereich 2 zur Aufnahme des Füllgutes (Pharmazeutika), an den sich ein im Durchmesser gegenüber dem Bereich 2 verkleinerter Halsbereich 3 anschließt, der wiederum in einen im Durchmesser gegenüber dem Halsbereich 3 vergrößerten Kopfbereich 4 übergeht. Der Kopfbereich 4 ist mittels eines nicht dargestellten Verschlusses, beispielsweise einer Blechkappe oder ähnlichem, verschließbar. Wesentlich dabei ist, dass derartige Vials 1 für verschiedene Formate, d.h. für verschiedene Füllmengen bzw. Füllvolumina angeboten werden, die sich insbesondere in der Höhe bzw. dem Durchmesser des Aufnahmeraums 1 unterscheiden, jedoch oftmals einen Halsbereich 3 und einen Kopfbereich 4 derselben Größe aufweisen.

Gemäß der Fig. 1 umfasst die Verpackungsanlage 100 eine vorzugsweise endlos umlaufende Fördereinrichtung 10, beispielsweise in Form von Riemenbändern, Ketten oder ähnlichem, die mittels eines nicht dargestellten Antriebs kontinuierlich, oder aber taktweise in Richtung des Pfeils 11 angetrieben ist. In dem dargestellten Bereich der Verpackungsanlage 100 bzw. der Fördereinrichtung 10 ist lediglich ein geradlinig ausgebildeter Bereich der Fördereinrichtung 10 dargestellt. Wesentlich ist, dass im Bereich der Transportstrecke der Fördereinrichtung 10 in der Regel mehrere Handhabungseinrichtungen 12, 13 angeordnet sind, die in der Fig. 1 lediglich symbolhaft durch deren äußere Begrenzung dargestellt sind. Bei den Handhabungseinrichtungen 12, 13 handelt es sich insbesondere, jedoch nicht ausschließlich um Handhabungseinrichtungen 12, 13 zum Füllen, Kontrollieren und Verschließen der Vials 1. Insbesondere kann es dabei vorgesehen sein, dass wenigstens eine der Handhabungseinrichtungen 12, 13 als Wiegeeinrichtung bzw. Wiegestation ausgebildet ist, in deren Bereich ein oder mehrere Vials 1 durch Aufstellen des bzw. der betreffenden Vials 1 auf eine nicht dargestellte Wiegeplattform der Wiegeeinrichtung gewogen werden, um damit das Füllgewicht des zuvor in das Vial 1 eingefüllten Pharmazeutika bestimmen zu können.

Die Vials 1 werden beispielhaft im Bereich eines um eine vertikale Achse 14 drehbar gelagerten Zuförderrades 15 in die Fördereinrichtung 10 angegeben und ebenfalls beispielhaft im Bereich eines Ausschleusrades 16, das ebenfalls in einer vertikal angeordneten Achse 17 drehbar ist, aus der Fördereinrichtung 10 wieder ausgeschleust.

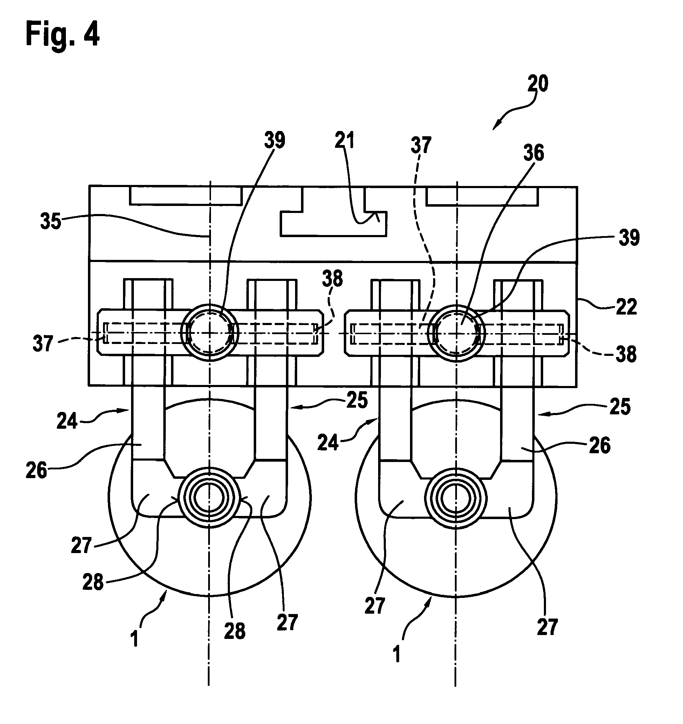

Die Fördereinrichtung 10 weist vorzugsweise in gleichmäßigen Abständen zueinander angeordnete Träger 18 auf, an denen jeweils eine Aufnahmeeinheit 20 für Vials 1 austauschbar befestigt ist. Wie insbesondere anhand der Fig. 4 erkennbar ist, weist dazu beispielsweise die dem Träger 18 zugewandte Seite der Aufnahmeeinheit 20 eine schwalbenschwanzförmige Nut 21 auf, die in einen entsprechenden Aufnahmeabschnitt oder ähnliches des Trägers 18 einführbar ist. Durch die austauschbare Befestigung der Aufnahmeeinheiten 20 lässt sich insbesondere eine Formatanpassung der Aufnahmeeinheiten 20 an unterschiedlich große Vials 1, insbesondere an unterschiedlich große Halsbereiche 3 der Vials 1, erzielen.

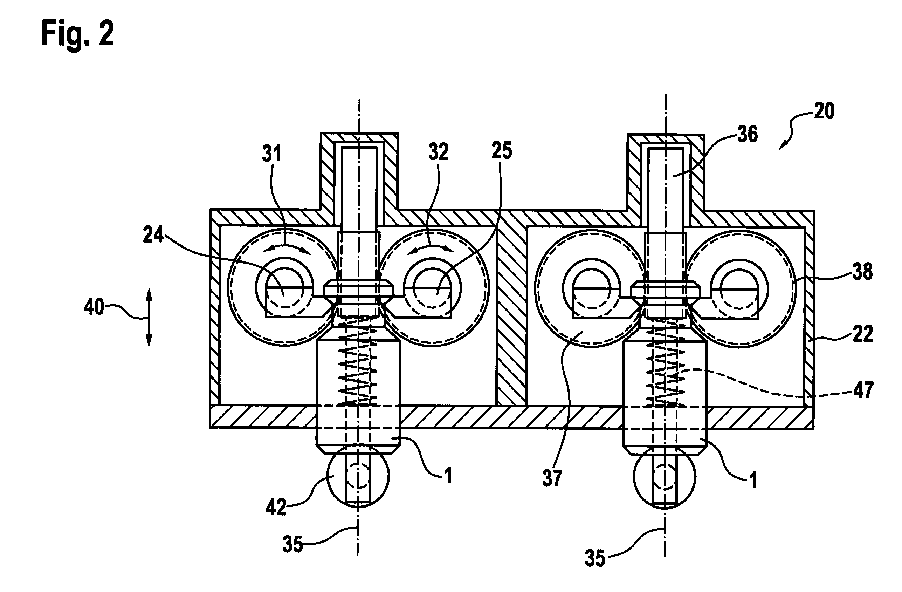

Wie insbesondere anhand einer Zusammenschau der Fig. 2 bis 4 erkennbar ist, dient jede der Aufnahmeeinheiten 20 der gleichzeitigen Aufnahme bzw. dem gleichzeitigen Transport von zwei Vials 1 innerhalb der Fördereinrichtung 10. Selbstverständlich liegt es aber auch im Rahmen der Erfindung, eine Aufnahmeeinheit 20 derart auszubilden, dass diese zur Aufnahme eines einzigen Vials 1, oder aber zur Aufnahme von mehr als zwei Vials 1 geeignet ist.

Die Aufnahmeeinheit 20 umfasst ein block- bzw. kastenförmiges Gehäuse 22, aus dem für jedes der Vials 1 zwei identisch ausgebildete Halteelemente 24, 25 herausragen, die im Folgenden noch näher beschrieben werden. Jedes der Halteelemente 24, 25 weist einen teilweise aus dem Gehäuse 22 herausragenden Trägerabschnitt 26 auf, der auf der dem Gehäuse 22 abgewandten Seite in einen Halteabschnitt 27 übergeht. Der Halteabschnitt 27 weist wiederum an seinem mit dem Vials 1 zusammenwirkenden Ende beispielsweise eine teilkreisförmige Haltekontur 28 auf, die formschlüssig mit dem Halsbereich 3 des Vials 1 zusammenwirkt, wobei die Höhe bzw. Dicke des Halteabschnitts 27 im Bereich insbesondere der Haltekontur 28 nicht größer ist als die Höhe bzw. Dicke des Halsbereichs 3 des Vials 1.

Während die Längsachsen der Trägerabschnitte 26 senkrecht zur Förderrichtung (Pfeil 11) der Aufnahmeeinheiten 20 ausgerichtet sind, verlaufen die Halteabschnitte 27 parallel zur Förderrichtung der Aufnahmeeinheiten 20. Wesentlich ist, dass die Halteelemente 24, 25 entsprechend der Pfeile 31, 32 (Fig. 2) schwenk- bzw. drehbar angeordnet sind. Hierbei werden grundsätzlich zwei Stellungen der Halteelemente 24, 25 unterschieden: In einer ersten Stellung der Halteelemente 24, 25 zum Halten bzw. zum Transport der Vials 1 befinden sich die Haltekonturen 28 der Halteelemente 24, 25 an einander gegenüberliegenden Seiten des Vials 1 in (formschlüssigem) Anlagekontakt mit dem Halsbereich 3 der Vials 1, während in einer zweiten Stellung der Halteelemente 24, 25 die Halteelemente 24, 25 außer Eingriff mit dem Halsbereich 3 der Vials 1 angeordnet sind, so dass die Vials 1 in dieser Stellung von den Halteelementen 24, 25 freigestellt sind, um insbesondere innerhalb der Handhabungseinrichtungen 12, 13 ein einfacheres Handling der Vials 1 zu ermöglichen. Dadurch, dass die Halteelemente 24, 25 während des Haltens im Halsbereich 3 angeordnet sind, wird ein Durchrutschen des Vials 1 nach unten während des Transports vermieden, so dass auf Bodenschienen o.ä. für die Vials 1 verzichtet werden kann. Weiterhin wird dabei das gesamte Gewicht des Vials 1 von den Halteelementen 24, 25 aufgenommen.

Wie insbesondere anhand der Fig. 2 und 4 erkennbar ist, sind die beiden Halteelemente 24, 25 symmetrisch zu einer Ebene 35 angeordnet, die zwischen den Halteelementen 24, 25 in der Längsachse des Vials 1 verläuft.

Im Wesentlichen innerhalb des Gehäuses 22 sind die beiden Halteelemente 24, 25 für ein Vial 1 in Wirkverbindung mit einem parallel zu der Längsachse des Vials 1 angeordneten Verstellbolzen 36 angeordnet. Der Verstellbolzen 36 dient zum Schwenken bzw. Verdrehen der Halteelemente 24, 25 in deren Drehachsen. Hierzu weisen die Trägerabschnitte 26 innerhalb des Gehäuses 22 jeweils einen Verzahnungsbereich 37, 38 in Form einer Außenverzahnung auf, während der Verstellbolzen 36 eine entsprechende Gegenverzahnung 39 trägt. Durch Heben bzw. Absenken des Verstellbolzens 36 in Richtung des Doppelpfeils 40 (Fig. 2) wird mittels der Verzahnungsbereiche 37, 38 und der Gegenverzahnung 39 ein Schwenken bzw. Drehen der Halteelemente 24, 25 bewirkt. Um die entsprechende Auf- und Abbewegung des Verstellbolzens 36 erzeugen zu können, ragt an der Unterseite des Gehäuses 22 beispielhaft ein Endbereich 41 des Verstellbolzens 36 aus dem Gehäuse 22 heraus. An dem Endbereich 41 des Verstellbolzens 36 ist eine Rolle 42 drehbar gelagert, die mit einem im Bereich der Fördereinrichtung 10 ortsfest angeordneten, in der Fig. 3 lediglich schematisch erkennbaren Führungselement, beispielsweise einer Führungsschiene 45, zusammenwirkt. Durch eine entsprechende Formgebung bzw. Anordnung der Führungsschiene 42 wird beispielsweise bewirkt, dass beim Anlagekontakt der Rolle 42 an der Führungsschiene 45 und gleichzeitigem Transport der Aufnahmeeinheit 20 in Förderrichtung der Verstellbolzen 36 mit seinem Endbereich 41 nach unten, d.h. aus dem Gehäuse 22 herausgezogen wird, so dass die beiden Halteabschnitte 27 der Halteelemente 24, 25 aus ihrer waagerechten Position (erste Stellung) in eine vertikale Position (zweite Stellung) geschwenkt werden.

Vorzugsweise ist es vorgesehen, dass die Führungsschiene 45 lediglich in den Bereichen der Verpackungsanlage 100 angeordnet ist, in denen ein Freigeben bzw. eine Übernahme von Vials 1 erforderlich ist, d.h. insbesondere im Bereich des Zuführrades 15 und des Ausschleusrades 16. Darüber hinaus ist eine Führungsschiene 45 auch im Bereich derjenigen Handhabungseinrichtungen 12,13 vorgesehen, bei denen, insbesondere zum Wiegen der Vials 1, ein Freistellen von Vials 1 von der Fördereinrichtung 10 erforderlich ist.

Um in den Bereichen der Verpackungsanlage 100, in denen sich keine Führungsschienen 45 befinden, ein sicheres Halten bzw. Führen der Vials 1 im Bereich der Halteelemente 24, 25 zu ermöglichen, ist jedem der Verstellbolzen 36 darüber hinaus eine Druckfeder 47 zugeordnet, die innerhalb des Gehäuses 22 den Verstellbolzen 36 radial umfasst, und die sich beispielsweise an einem am Verstellbolzen 36 angeordneten Bund abstützt. Eine weitere Abstützung der Druckfeder 47 findet z.B. im Bodenbereich des Gehäuses 22 statt, derart, dass in einer Stellung, bei der der Verstellbolzen 36 sich nicht in Wirkverbindung mit der Führungsschiene 45 befindet, der Verstellbolzen 36 durch die Federkraft der Druckfeder 47 in eine angehobene Position innerhalb des Gehäuses 22 gegen einen (nicht dargestellten) gehäusefesten Anschlag gedrückt wird, in dem der Verstellbolzen 36 seine zweite Position einnimmt, so dass die Halteelemente 24, 25 das Vial 1 formschlüssig umfassen bzw. halten.

Die soweit beschriebene Verpackungsanlage 100 bzw. die Fördereinrichtung 10 kann in vielfältiger Art und Weise abgewandelt bzw. modifiziert werden, ohne vom Erfindungsgedanken abzuweichen.

## Patentansprüche

1. Vorrichtung zum Transport von pharmazeutischen Behältnissen (1), insbesondere von Vials, mit einer insbesondere endlos umlaufenden Fördereinrichtung (10), an der Aufnahmeeinheiten (20) für die Behältnisse (1) befestigt sind, wobei die Aufnahmeeinheiten (20) mittels wenigstens eines formatabhängigen Halteelements (24, 25) in Wirkverbindung mit den Behältnissen (1) angeordnet sind, wobei zwei Halteelemente (24, 25) für jedes Behältnis (1) vorgesehen sind, die jeweils um eine Achse des Halteelements (24, 25) in der Aufnahmeeinheit (20) schwenkbar sind, derart, dass in einer ersten Stellung zum Halten und Transport eines Behältnisses (1) die beiden Halteelemente (24, 25) über jeweils eine Haltekontur (28) auf gegenüberliegenden Seiten in Anlagekontakt mit dem Behältnis (1) sind, und wobei in einer zweiten Stellung zum Freistellen des Behältnisses (1) die Halteelemente (24, 25) im Bereich der Haltekontur (28) zum Behältnis (1) beabstandet sind,
**dadurch gekennzeichnet,**
**dass** die Halteelemente (24, 25) Trägerabschnitte (26) aufweisen, die aus einem Gehäuse (22) der Aufnahmeeinheit (20) teilweise herausragen, dass die Längsachsen der Trägerabschnitte (26) zumindest im Wesentlichen horizontal und senkrecht zur Transportrichtung der Behältnisse (1) angeordnet sind, dass an den Trägerabschnitten (26) auf der der Aufnahmeeinheit (20) abgewandten Seite Halteabschnitte (27) angeordnet sind, dass die Trägerabschnitte (26) um ihre Längsachsen schwenkbar sind, und dass die Trägerabschnitte (26) innerhalb des Gehäuses (22) eine Verzahnung (37, 38) aufweisen, die mit einer Gegenverzahnung (39) eines Verstellbolzens (36) zusammenwirkt, der innerhalb des Gehäuses (22) auf- und abbeweglich angeordnet ist, wobei der Verstellbolzen (36) zwischen den Trägerabschnitten (26) angeordnet ist.

2. Vorrichtung nach Anspruch 1,
**dadurch gekennzeichnet,**
**dass** die beiden Halteelemente (24, 25) identisch ausgebildet und symmetrisch zu einer Ebene (35) an der Aufnahmeeinheit (20) angeordnet sind.

3. Vorrichtung nach Anspruch 1 oder 2,
**dadurch gekennzeichnet,**
**dass** der Verstellbolzen (36) mittels eines Federelements (47) in Richtung eines gehäusefesten Anschlags gedrückt ist, in der sich die Halteelemente (24, 25) in ihrer ersten Stellung befinden.

4. Vorrichtung nach Anspruch 3,
**dadurch gekennzeichnet,**
**dass** der Verstellbolzen (36) zum Schwenken der Halteelemente (24, 25) mit einem im Bereich der Fördereinrichtung (10) angeordneten, insbesondere als Führungsschiene ausgebildeten Verstellelement (45) zusammenwirkt.

5. Vorrichtung nach einem der Ansprüche 1 bis 4,
**dadurch gekennzeichnet,**
**dass** die Aufnahmeeinheit (20) an der Fördereinrichtung (10) austauschbar befestigt ist.

6. Vorrichtung nach einem der Ansprüche 1 bis 5,
**dadurch gekennzeichnet,**
**dass** im Bereich der Fördereinrichtung (10) eine Wiegeeinrichtung (12, 13) vorgesehen ist, in der die Behältnisse (1) durch Aufstellen auf ein Wiegeelement und Freigeben durch die Halteelemente (24, 25) gewogen werden.

## Claims

1. Apparatus for conveying pharmaceutical containers (1), particularly vials, with an in particular continuously rotating conveyor device (10), on which receiving units (20) for the containers (1) are secured, wherein the receiving units (20) are operatively connected to the containers (1) by means of at least one format-dependent holding element (24, 25), wherein two holding elements (24, 25) are provided for each container (1) and are each pivotable in the receiving unit (20) about an axis of the holding element (24, 25), in such a way that, in a first position for holding and conveying a container (1), the two holding elements (24, 25) are in abutting contact with the container (1) on opposite sides by way of a respective holding contour (28), and wherein, in a second position for releasing the container (1), the holding elements (24, 25) are spaced apart from the container (1) in the area of the holding contour (28),
**characterized in that**
the holding elements (24, 25) have carrier portions (26) which protrude partially from a housing (22) of the receiving unit (20), the longitudinal axes of the carrier portions (26) are arranged at least substantially horizontally and perpendicular to the conveying direction of the containers (1), holding portions (27) are arranged on the carrier portions (26), on the side directed away from the receiving unit (20), the carrier portions (26) are pivotable about their longitudinal axes, and the carrier portions (26) have, inside the housing (22), a toothing (37, 38) which interacts with a counter-toothing (39) of an adjustment bolt (36) that is arranged to be movable upward and downward inside the housing (22), wherein the adjustment bolt (36) is arranged between the carrier portions (26).

2. Apparatus according to Claim 1, **characterized in that** the two holding elements (24, 25) are of identical design and are arranged on the receiving unit (20) symmetrically with respect to a plane (35).

3. Apparatus according to Claim 1 or 2, **characterized in that** the adjustment bolt (36) is pressed by means of a spring element (47) in the direction of a housing-fixed abutment in which the holding elements (24, 25) are located in their first position.

4. Apparatus according to Claim 3, **characterized in that** the adjustment bolt (36), for pivoting the holding elements (24, 25), interacts with an adjustment element (45) which is arranged in the area of the conveyor device (10) and which is configured in particular as a guide rail.

5. Apparatus according to one of Claims 1 to 4, **characterized in that** the receiving unit (20) is secured exchangeably on the conveyor device (10).

6. Apparatus according to one of Claims 1 to 5, **characterized in that**, in the area of the conveyor device (10), a weighing device (12, 13) is provided in which the containers (1) are weighed by being placed onto a weighing element and being released by the holding elements (24, 25).

## Revendications

1. Dispositif pour transporter des récipients pharmaceutiques (1), en particulier des flacons, avec un dispositif de transport (10) tournant en particulier sans fin, auquel des unités de réception (20) pour les récipients (1) sont fixées, dans lequel les unités de réception (20) sont disposées en liaison active avec les récipients (1) au moyen d'au moins un élément de maintien dépendant du format (24, 25), dans lequel il est prévu deux éléments de maintien (24, 25) pour chaque récipient (1), qui peuvent pivoter dans l'unité de réception (20) respectivement autour d'un axe de l'élément de maintien (24, 25), de telle manière que dans une première position les deux éléments de maintien (24, 25) soient en contact appliqué avec le récipient (1) respectivement via un contour de maintien (28) sur des côtés opposés pour le maintien et le transport d'un récipient (1), et dans lequel dans une deuxième position les éléments de maintien (24, 25) sont écartés du récipient (1) dans la région du contour de maintien (28) pour la libération du récipient (1), **caractérisé en ce que** les éléments de maintien (24, 25) présentent des parties de support (26), qui sortent partiellement hors d'un boîtier (22) de l'unité de réception (20), **en ce que** les axes longitudinaux des parties de support (26) sont disposés au moins essentiellement horizontalement et perpendiculairement à la direction de transport des récipients (1), **en ce que** des parties de maintien (27) sont disposées sur les parties de support (26) sur le côté opposé à l'unité de réception (20), **en ce que** les parties de support (26) peuvent pivoter autour de leurs axes longitudinaux, et **en ce que** les parties de support (26) présentent à l'intérieur du boîtier (22) une denture (37, 38), qui coopère avec une denture opposée (39) d'un boulon de réglage (36), qui est disposé de façon ascendante et descendante à l'intérieur du boîtier (22), dans lequel le boulon de réglage (36) est disposé entre les parties de support (26).

2. Dispositif selon la revendication 1, **caractérisé en ce que** les deux éléments de maintien (24, 25) sont réalisés de façon identique et sont disposés symétriquement par rapport à un plan (35) sur l'unité de réception (20).

3. Dispositif selon la revendication 1 ou 2, **caractérisé en ce que** le boulon de réglage (36) est poussé au moyen d'un élément de ressort (47) en direction d'une butée solidaire du boîtier, dans laquelle les éléments de maintien (24, 25) se trouvent dans leur première position.

4. Dispositif selon la revendication 3, **caractérisé en ce que** le boulon de réglage (36) coopère, pour le pivotement des éléments de maintien (24, 25), avec un élément de réglage (45), réalisé en particulier en forme de rail de guidage, disposé dans la région du dispositif de transport (10).

5. Dispositif selon l'une quelconque des revendications 1 à 4, **caractérisé en ce que** l'unité de réception (20) est fixée de façon échangeable au dispositif de transport (10).

6. Dispositif selon l'une quelconque des revendications 1 à 5, **caractérisé en ce qu'**il est prévu dans la région du dispositif de transport (10) un dispositif de pesage (12, 13), dans lequel les récipients (1) sont pesés par dépôt sur un élément de pesage et libération par les éléments de maintien (24, 25).
